# EUROPÄISCHE PATENTANMELDUNG

(11) **EP 2 123 831 A2**
(43) Veröffentlichungstag der Anmeldung: **25.11.2009**
(21) Anmeldenummer: 09005607.8
(22) Anmeldetag: 22.04.2009
(51) Int. Cl.: E02F 3/36, E02F 3/96

(54) **Bagger-Zusatzgerät**

(30) Priorität: 24.05.2008 DE 102008025026
(71) Anmelder: MTS Gesellschaft für Maschinentechnik und Sonderbauten MBH, 72534 Hayingen (DE)
(72) Erfinder: Schrode, Rainer, 88529 Zwiefalten (DE)
(74) Vertreter: Knapp, Thomas

(57) **Zusammenfassung**

Bagger-Zusatzgerät (10), mit einer Kupplung (12) zum Ankuppeln des Bagger-Zusatzgeräts an einen Baggerarm, mit einem Funktionsabschnitt (14), und mit einer Dreheinrichtung (26) zum Drehen des Funktionsabschnitts (14) relativ zur Kupplung (12), **dadurch gekennzeichnet, dass** die Dreheinrichtung (26) ein selbsthemmendes Schneckengetriebe (42) umfasst, welches einerseits mit einem Rotor (48) der Dreheinrichtung (26) und andererseits mit einem Antrieb (38) der Dreheinrichtung (26) wirkverbunden ist.

## Beschreibung

Die Erfindung betrifft ein Bagger-Zusatzgerät nach dem Oberbegriff des Anspruchs 1.

DE 103 55 172 B3 offenbart ein Bagger-Zusatzgerät in Form eines Anbauverdichters. Ein solcher wird an einem Baggerarm lösbar befestigt. Der Vorteil dieser Technologie ist, dass neben der dynamischen Verdichtung mit dem Druck des Baggerarms zusätzlich eine statische Last aufgebracht werden kann. Dadurch erhöht sich die Tiefenwirkung erheblich.

Auch die DE 102 07 066 C1 offenbart einen Anbauverdichter. Beide Anbauverdichter verfügen jeweils über eine Dreheinrichtung, mit der ein Funktionsabschnitt des Anbauverdichters gegenüber der Kupplung gedreht werden kann. Der Funktionsabschnitt umfasst die eigentliche Verdichterplatte und eine hydraulisch angetriebene Exzentereinrichtung, welche im Betrieb die Verdichterplatte in die für den Verdichtungsvorgang erforderlichen Schwingungen versetzt.

Aufgabe der vorliegenden Erfindung ist es, ein Bagger-Zusatzgerät zu schaffen, welches möglichst robust ist, eine genaue Positionierung des Funktionsabschnitts gestattet und den Maschinenführer entlastet.

Diese Aufgabe wird durch ein Bagger-Zusatzgerät mit den Merkmalen des Anspruchs 1 gelöst. Vorteilhafte Weiterbildungen der Erfindung sind in Unteransprüchen angegeben. Für die Erfindung wichtige Merkmale finden sich darüber hinaus in der nachfolgenden Beschreibung und in der Zeichnung, wobei diese Merkmale für die Erfindung sowohl in Alleinstellung als auch in unterschiedlichen Kombinationen wichtig sein können, ohne dass hierauf jeweils explizit hingewiesen wird.

Bei einem Schneckengetriebe handelt es sich um ein sehr robustes Getriebe, mit dem auch die beim Einsatz eines Bagger-Zusatzgeräts auftretenden hohen Kräfte zuverlässig aufgenommen werden können. Durch die Wahl einer entsprechenden Steigung einer Antriebsschnecke des Schneckengetriebes wird eine Selbsthemmungsfunktion erzielt, wodurch verhindert wird, dass sich das Bagger-Zusatzgerät im Betrieb beispielsweise aufgrund von Bodenkräften aus seiner Soll-Position wegdreht. Bisher musste in einem solchen Fall der Maschinenführer das Bagger-Zusatzgerät vom Boden abheben und eine erneute Justierung des Drehwinkels des Bagger-Zusatzgeräts durchführen. Da dies aufgrund der selbsthemmenden und robusten Konstruktion entfallen kann, wird der Maschinenführer entlastet. Außerdem gestattet ein Schneckengetriebe aufgrund der vergleichsweise starken Untersetzung der Antriebsdrehzahl eine sehr präzise Einstellung der Winkellage des Bagger-Zusatzgeräts.

In einer Weiterbildung des erfindungsgemäßen Bagger-Zusatzgeräts wird vorgeschlagen, dass der Antrieb einen hydraulischen Gerotor umfasst. Da ein solcher Gerotor einen vergleichsweise geringen Unförmigkeitsgrad aufweist, erzeugt er einen gleichmäßigen Abtrieb, was wiederum die Einstellung einer gewünschten Winkellage des Funktionsabschnitts des Bagger-Zusatzgeräts erleichtert. Ein Gerotor stellt darüber hinaus aufgrund seiner robusten und einfachen Bauweise einen soliden Antrieb im Straßen- und Tiefbaueinsatz dar.

Ferner wird vorgeschlagen, dass das Schneckengetriebe mindestens bereichsweise in einem Ölbad angeordnet ist. Hierdurch wird eine ausreichende Durchschmierung erzielt. Vorzugsweise liegt das Getriebe bei horizontaler Lage des Rotors, also senkrechter Drehachse des Rotors, bis zu 50% im Ölbad. Separate Ölförderpumpen und -kanäle können so vermieden werden, wodurch die Fertigungskosten gesenkt werden.

Ein Schneckenrad des Schneckengetriebes kann mittels mindestens eines Gleitlagers gelagert sein. Dabei kann das Schneckenrad mit dem Rotor der Dreheinrichtung verbunden sein oder diesen sogar bilden. Dies ist eine wirtschaftliche und angesichts der vergleichsweise geringen Drehgeschwindigkeit des Schneckenrads gut geeignete Konstruktionslösung, da diese im Vergleich beispielsweise zu Wälzlagern in der Lage ist, harte Stöße, wie sie üblicherweise im Betrieb von Bagger-Zusatzgeräten vorkommen, gut zu absorbieren.

Dabei kann ein Radial-Gleitlager mindestens ein Führungsband aus einem Thermoplast umfassen. Dies gestattet eine toleranzarme, also vergleichsweise spielfreie Gleitbewegung des Schneckenrads. Führungsbänder aus Thermoplast besitzen darüber hinaus eine hohe Verschleißfestigkeit und gute Notlaufeigenschaften, beispielsweise bei einem Ölverlust.

Vorgeschlagen wird ferner, dass ein Axial-Gleitlager des Schneckenrads einen Messingring umfasst. Auch für die Lagerung einer Antriebsschnecke kommen Lager aus Messing in Frage. Axial-Gleitlager aus Messing können auch hohe Kräfte aufnehmen und besitzen ebenfalls gute Notlaufeigenschaften im Falle eines Ölverlusts.

In mindestens einem Gleitlager sollte eine Schmiertasche vorhanden sein, welche im Betrieb die Ausbildung eines hydrostatischen Schmierfilms unterstützt. Damit wird Verschleiß reduziert, die Lagerung im Idealfall sogar verschleißfrei.

Eine weitere vorteilhafte Ausgestaltung des erfindungsgemäßen Bagger-Zusatzgeräts sieht vor, dass das Schneckengetriebe eine Magneteinrichtung umfasst, welche im Betrieb entstehende Metallspäne auffängt. Es versteht sich, dass der Magnet so angeordnet ist, dass die Späne an einem unkritischen Ort aufgefangen werden, an dem sie von den Zahnflächen des Schneckengetriebes fernbleiben, wodurch der Verschleiß der Zahnflächen des Schneckengetriebes reduziert wird.

Vorteilhafterweise umfasst die Dreheinrichtung des Bagger-Zusatzgeräts eine Drehdurchführung für mindestens zwei Hydraulikleitungen und/oder mindestens eine elektrische Leitung, wobei die Drehdurchführung einen drehfesten Abschnitt mit einem ersten Leitungsabschnitt und einen drehbaren Abschnitt mit einem zweiten Leitungsabschnitt umfasst. Hierdurch wird der Tatsache Rechnung getragen, dass bei vielen Bagger-Zusatzgeräten ein hydraulischer Volumenstrom zum Antrieb eines Hydraulikmotors und/oder eine elektrische Leistungsversorgung zum Betrieb elektrischer Komponenten gefordert ist. Daher wird erfindungsgemäß in die Dreheinrichtung eine Drehdurchführung integriert, welche mindestens zwei Hydraulikleitungen und/oder eine elektrische Leitung vom drehfesten Abschnitt zum drehbaren Abschnitt und weiter zum Funktionsabschnitt des Bagger-Zusatzgerätes leitet, ohne dass hierdurch die freie Rotierbarkeit des Funktionsabschnitts relativ zur Kupplung behindert wird. Durch entsprechend enge Passungen und Abdichtungen zwischen drehfestem und drehbarem Abschnitt können hydraulische Arbeitsdrücke von bis zu 250 bar übertragen werden. Auch sind mehrere Leitungen, im Falle von Hydraulikleitungen beispielsweise ein Vorlauf, ein Rücklauf sowie eine Leckageleitung, über die Drehdurchführung leitbar. Um Schäden an der Drehdurchführung durch eine unsachgemäße Montage zu vermeiden, kann in letzterem Falle beispielsweise auf der Rücklaufseite ein Rückschlagventil eingebaut sein, welches bei einem falschen Anschluss der Leitung die Dichtungen der Drehdurchführung vor einer Beschädigung schützt. Eine Drehdurchführung für elektrische Energie kann beispielsweise für die Versorgung einer Messeinrichtung oder einer Lichtquelle verwendet werden.

In Weiterbildung hierzu wird vorgeschlagen, dass mindestens ein erster Bereich des drehfesten Abschnitts der Drehdurchführung ein Element eines Gehäuses des Schneckengetriebes bildet. Hierdurch wird die Bauhöhe der Dreheinrichtung reduziert. Durch die erzielte flache Bauweise wird auch die Steifigkeit der Gesamtkonstruktion positiv beeinflusst.

Ferner wird im Zusammenhang mit der Drehdurchführung vorgeschlagen, dass ein zweiter Bereich des drehfesten Abschnitts eine Achse für den drehbaren Abschnitt bildet, und dass der zweite Bereich des drehfesten Abschnitts lösbar am ersten Bereich des drehfesten Abschnitts befestigt ist. Durch diese Zweiteiligkeit wird der Tatsache Rechnung getragen, dass eine Drehdurchführung nicht immer erforderlich ist und gegebenenfalls daher sowohl die Achse als auch der drehbare Abschnitt entfallen können. Dies senkt die Fertigungskosten, da sich Ausführungen mit/ohne Drehdurchführung nur durch zusätzlich montierte beziehungsweise weggelassene Teile unterscheiden. Darüber hinaus hat eine solche Zweiteiligkeit den Vorteil, dass nur ein Teil der Drehdurchführung ausgetauscht werden muss, wenn es zu einem Ausfall von Dichtungen kommt. Durch die mehrteilige Bauweise nicht nur der Drehdurchführung, sondern des gesamten Bagger-Zusatzgeräts wird im Grunde eine Art Baukasten-Bauweise realisiert, bei der verschlissene Teile einfach ausgetauscht werden können, so dass die Funktionsfähigkeit des Bagger-Zusatzgeräts ohne großen Kostenaufwand wieder hergestellt werden kann. Ein weiteres Beispiel für diese Baukasten-Bauweise ist auch die Kombination aus dem Gehäuse des Antriebs und dem Gehäuse der Dreheinrichtung.

Wie bereits eingangs ausgeführt wurde, handelt es sich bei dem Bagger-Zusatzgerät vorteilhafterweise um einen Anbauverdichter. Bei einem solchen kommen die Vorteile der erfindungsgemäßen Dreheinrichtung sowie der erfindungsgemäßen Drehdurchführung besonders gut zur Geltung.

Umrüstzeiten werden reduziert, wenn die Kupplung eine Schnellkupplung zum Anschluss eines Hydrauliksystems des Bagger-Zusatzgeräts an ein Hydrauliksystem des Baggers und/oder eine Schnellkupplung zum Anschluss eines elektrischen Systems des Bagger-Zusatzgeräts an ein elektrisches System des Baggers umfasst.

Nachfolgend werden Ausführungsformen der Erfindung unter Bezugnahme auf die Zeichnung näher erläutert. In der Zeichnung zeigen:
- Figur 1: eine perspektivische Darstellung eines Bagger-Zusatzgeräts in Form eines Anbauverdichters mit einer Dreheinrichtung und einer Drehdurchführung;

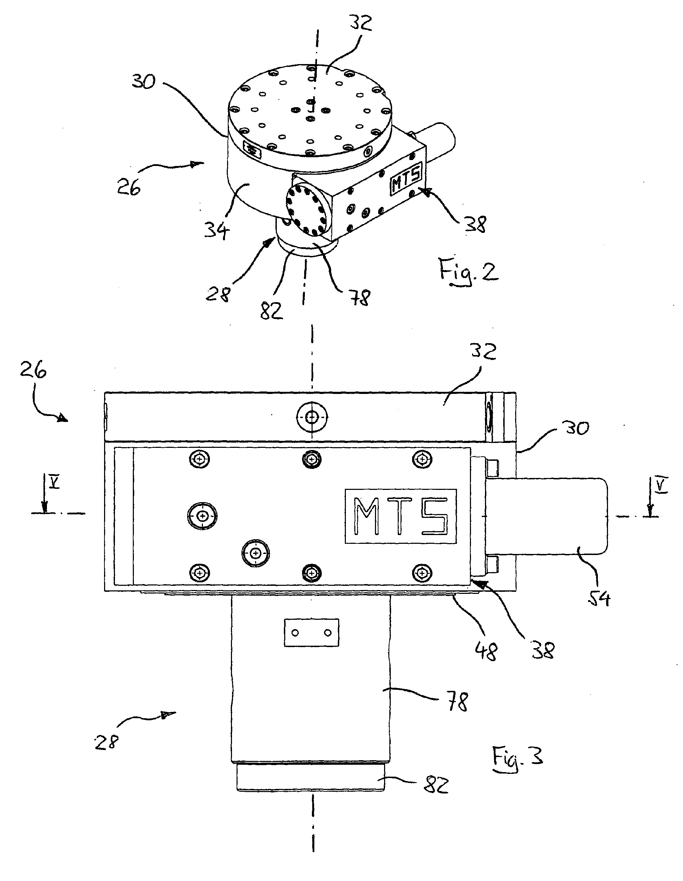

- Figur 2: eine perspektivische Darstellung der Dreheinrichtung und Drehdurchführung von Figur 1;
- Figur 3: eine Seitenansicht der Dreheinrichtung und Drehdurchführung von Figur 1;

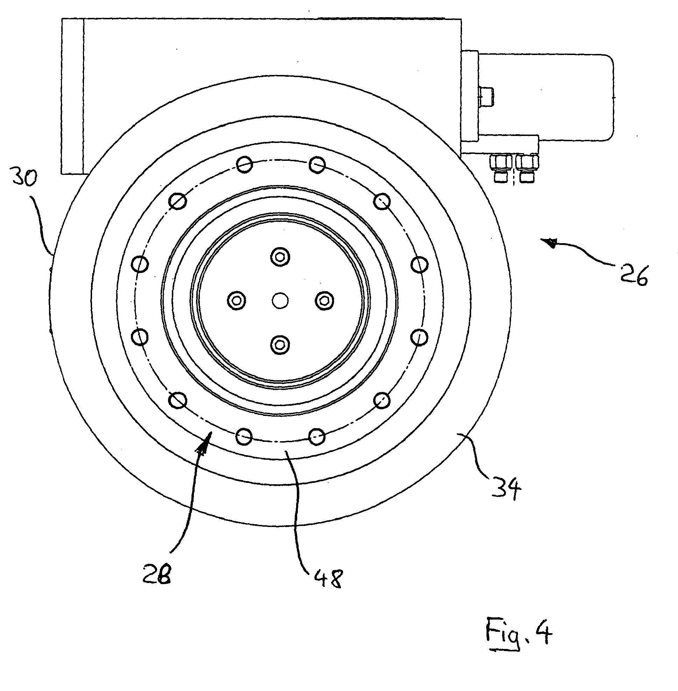

- Figur 4: eine Ansicht von unten der Dreheinrichtung und Drehdurchführung von Figur 1;
- Figur 5: einen Schnitt längs der Linie V-V von Figur 3;
- Figur 6: einen Schnitt längs der Linie VI-VI von Figur 5;
- Figur 7: eine Darstellung ähnlich Figur 2 einer zweiten Ausführungsform;
- Figur 8: eine Darstellung ähnlich Figur 3 der zweiten Ausführungsform von Figur 2;
- Figur 9: eine Darstellung ähnlich Figur 6 der zweiten Ausführungsform; und
- Figur 10: ein Detail X von Figur 9.

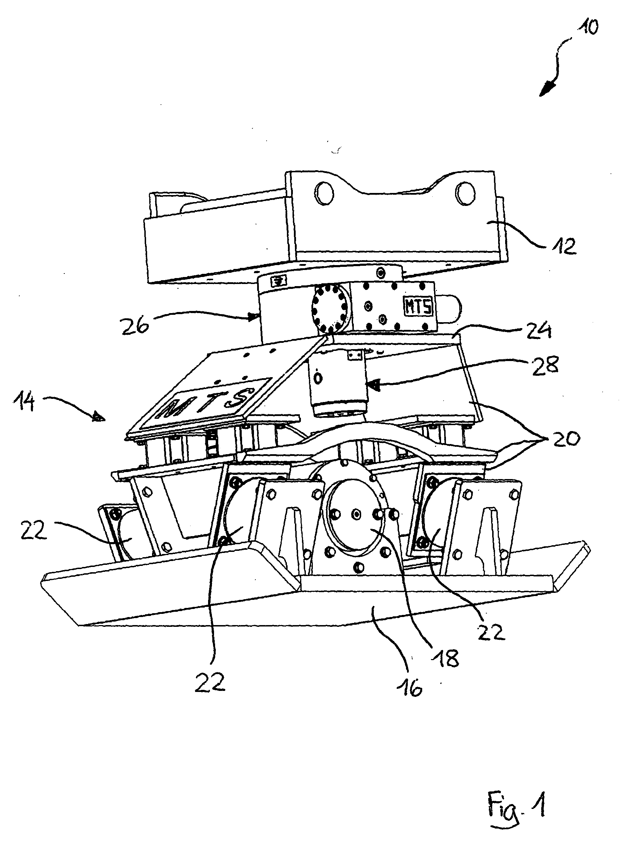

Ein Bagger-Zusatzgerät in Form eines Anbauverdichters trägt in Figur 1 insgesamt das Bezugszeichen 10. Der Anbauverdichter 10 umfasst eine Kupplung 12 zum mechanischen Ankuppeln des Anbauverdichters an einen in Figur 1 nicht dargestellten Baggerarm eines Baggers. Nicht sichtbar sind darüber hinaus in der Kupplung 12 vorhandene Schnellkupplungen zum Anschluss eines.Hydrauliksystems des Anbauverdichters 10 an ein Hydrauliksystems des Baggers und zum Anschluss eines elektrischen Systems des Anbauverdichters 10 an ein elektrisches System des Baggers.

Der Anbauverdichter 10 verfügt über einen Funktionsabschnitt 14, der unter anderem eine Verdichterplatte 16, eine mit dieser verbundene Exzentereinrichtung 18 und eine Tragstruktur 20 umfasst, die mit der Verdichterplatte 16 über Schwingungsdämpfer 22 verbunden ist. Eine obere Endplatte 24 der Tragstruktur 20 ist mit einer Dreheinrichtung 26 verbunden, die weiter unten noch stärker im Detail erläutert werden wird. Die Dreheinrichtung 26 ist wiederum an der Kupplung 12 befestigt. In die Dreheinrichtung 26 ist ferner eine Drehdurchführung 28 integriert, auf die ebenfalls weiter unten noch stärker im Detail eingegangen werden wird.

Die Dreheinrichtung 26 umfasst ein drehfest mit der Kupplung 12 verbundenes, insgesamt zylindrisches Gehäuse 30. Dessen obere scheibenförmige Deckplatte 32 ist über eine Mehrzahl von Schrauben mit der Kupplung 12 verschraubt. Das Gehäuse 30 umfasst ferner eine Umfangswand 34, die in einem Teilbereich einen Teil eines Gehäuses 36 eines Antriebs 38 der Dreheinrichtung 26 bildet.

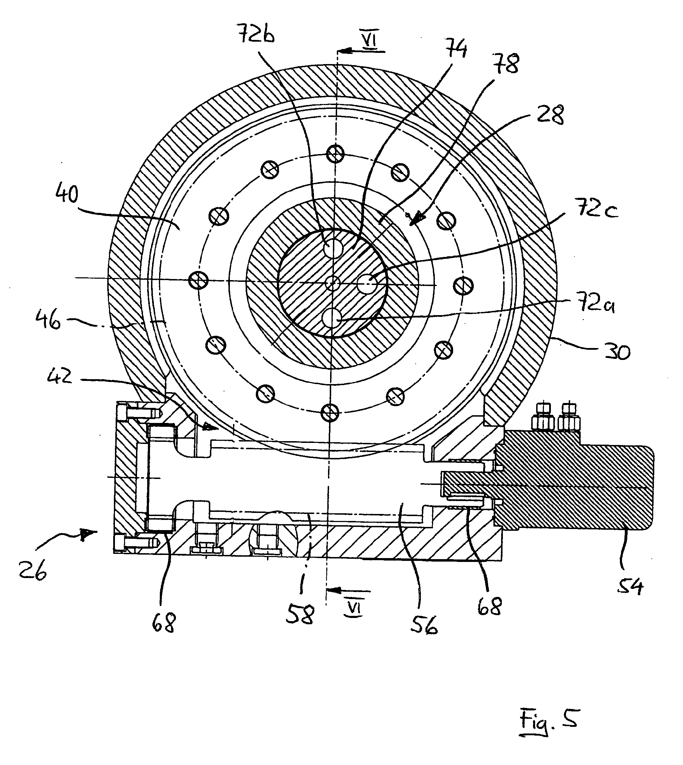

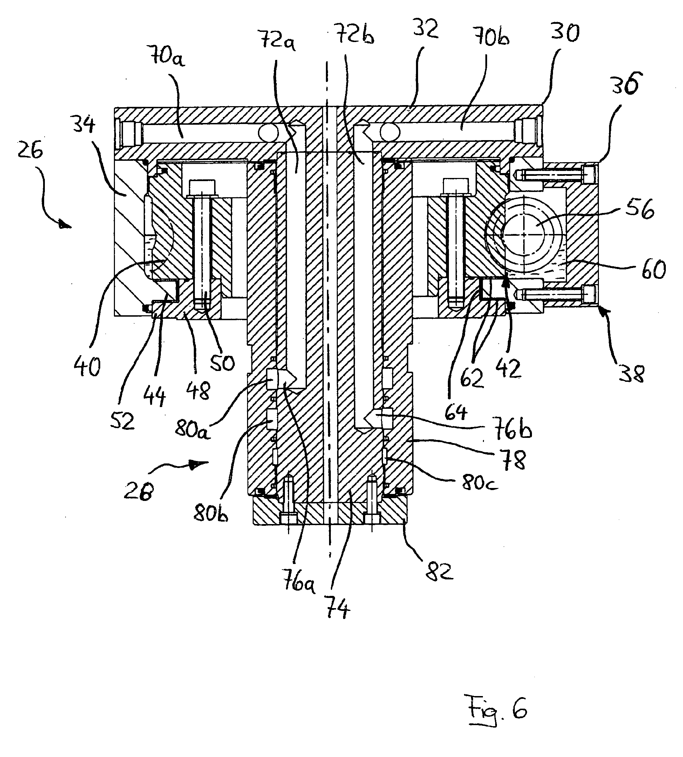

In dem Gehäuse 30 ist ein Schneckenrad 40 eines Schneckengetriebes 42 aufgenommen. Das Schneckenrad 40 ist auf noch näher darzustellende Art und Weise gleitend auf einem nach radial einwärts zeigenden Vorsprung 44 der Umfangswand 34 gelagert. Das Schneckenrad 40 trägt auf seiner radialen Außenseite Zähne, die in Figur 5 durch eine strichpunktierte Linie 46 angedeutet sind. In Figur 6 unterhalb des Schneckenrads 40 ist ein Adapterring 48 angeordnet, der mit dem Schneckenrad 40 über Schrauben 50 starr verbunden ist. Der Adapterring 48 bildet einen Rotor der Dreheinrichtung 26. Der Adapterring 48 ist wiederum über Schrauben (nicht sichtbar) mit der oberen Endplatte 24 der Tragstruktur 20 verschraubt. Der Adapterring 48 verfügt über einen nach radial auswärts weisenden Steg 52, der am Vorsprung 44 von unten her gleitend anliegt. Auf diese Weise sind Schneckenrad 40 und Adapterring 48 axial im Gehäuse 30 gehalten, können jedoch gegenüber diesem rotieren.

Der Antrieb 38 umfasst einen hydraulischen Gerotor 54, auf dessen Abtriebswelle eine Schnecke 56 befestigt ist. Die Schnecke 56 ist an ihren beiden axialen Enden auf noch näher darzustellende Art und Weise im Gehäuse 36 gelagert. Ein Schneckengewinde, welches in Figur 5 nur durch eine strichpunktierte Linie 58 angedeutet ist, wirkt mit den Zähnen 46 des Schneckenrads 40 zusammen. Die Steigung des Schneckengewindes 58 ist dabei so gewählt, dass durch eine Drehung der Schnecke 56 zwar das Schneckenrad 40 in Drehung versetzt wird, umgekehrt aber eine Drehung des Schneckenrads 40 nicht die Schnecke 56 in Drehung versetzen kann. Das Schneckengetriebe 42 ist also selbsthemmend. Das Übersetzungsverhältnis des Schneckengetriebes 42 ist so gewählt, dass unter üblichen Bedingungen eine Drehzahl des Schneckenrads 40 von ungefähr 10 min⁻¹ erreicht wird. Die Schmierung des Schneckengetriebes 42 erfolgt durch ein Ölbad 60, dessen Spiegel bei der in Figur 6 gezeigten horizontalen Lage der Schnecke 56 ungefähr auf halber Höhe der Schnecke 56 liegt.

Die Lagerung des Schneckenrads 40 gegenüber dem Gehäuse 30 erfolgt in axialer Richtung mittels Messingringen 62 und in radialer Richtung mittels Führungsbändern 64 aus einem Hochleistungsthermoplast. Das Ölbad 60 wird durch O-Ringe (ohne Bezugszeichen) nach außen hin abgedichtet. Die Schnecke 56 ist im Gehäuse 36 ebenfalls über Messing-Gleitlager 68 gelagert. In den Messing-Gleitlagern 68 der Schnecke 56 sind in der Zeichnung nicht sichtbare Schmiertaschen in die entsprechenden Lauffläche eingearbeitet, welche im Betrieb einen stabilen hydrostatischen Schmierfilm bilden. Ferner verfügt der Antrieb 38 über einen in der Zeichnung ebenfalls nicht sichtbaren Magnet, durch den im Betrieb anfallende Späne aufgefangen und von den Flächen der Zähne 46 und von dem Schneckengewinde 58 fern gehalten werden.

Man erkennt aus Figur 6, dass die Deckplatte 32 nicht nur zur Anbindung der Dreheinrichtung 26 an die Kupplung 12 dient, sondern auch Teil des Gehäuses 36 des Antriebs 38 ist. Darüber hinaus gehört die Deckplatte 32 auch noch zu der Drehdurchführung 28: Sie enthält nämlich vor allem drei radial verlaufende Hydraulikkanäle, von denen in Figur 6 nur zwei mit dem Bezugszeichen 70a und 70b sichtbar sind. Radial innen gehen diese hydraulischen Kanäle 70a und 70b in axial verlaufende Kanäle 72a und 72b über, die sich in einer an der Deckplatte 32 lösbar befestigten Achse 74 der Drehdurchführung 28 fortsetzen. Der axiale Kanal 72a endet in einer radialen Öffnung 76a in der äußeren Umfangswand der Achse 74, der Kanal 72b in einer radialen Öffnung 76b ebenfalls in der Außenwand der Achse 74. Ein dritter, nur in Figur 5 sichtbarer axialer Kanal 72c endet ebenfalls in einer radialen Öffnung in der Umfangswand der Achse 74, die in Figur 6 jedoch nicht sichtbar ist. Die radialen Öffnungen 76a und b und die dritte radiale Öffnung sind axial zueinander versetzt angeordnet.

Auf die Achse 74 ist eine rohrförmige Hülse 78 im Gleitsitz aufgesetzt, sie kann sich also gegenüber der Achse 74 drehen. In der Innenwand der Hülse 78 sind, jeweils auf der axialen Höhe der entsprechenden radialen Öffnungen 76a, 76b und der dritten nicht sichtbaren radialen Öffnung entsprechende Ringnuten 80a bis c vorhanden, die wiederum mit in den Figuren nicht sichtbaren Hydraulikanschlüssen fluidisch verbunden sind, die auf der radialen Außenseite der Hülse 78 angeordnet sind. Die Ringnuten 80a bis c sind nach außen und zueinander durch Wellendichtringe beziehungsweise O-Ringe (ohne Bezugszeichen) abgedichtet. Die Hülse 78 ist axial auf der Achse 74 durch eine Endplatte 82 gesichert, die auf das abragende Ende der Achse 74 aufgeschraubt ist.

Die Deckplatte 32, die Achse 74 und die Endplatte 82 bilden drehfeste Abschnitte der Drehdurchführung 28, wohingegen die Hülse 78 einen drehbaren Abschnitt der Drehdurchführung 28 bildet. Die Kanäle 70, 72 und 76 bilden erste drehfeste Leitungsabschnitte, die Ringnuten 80 entsprechende drehbare zweite Leitungsabschnitte. Die Kanäle 70 und 72, die radialen Öffnungen 76 und die Ringnuten 80 gehören zu dem Hydrauliksystem des Anbauverdichters, durch welches die Exzentereinrichtung 18 angetrieben wird.

Der Anbauverdichter 10 arbeitet folgendermaßen: Über die Kupplung 12 wird der Anbauverdichter 10 an einem komplementären Teil eines Baggerarms befestigt. Über die in Figur 1 nicht sichtbaren hydraulischen Schnellkupplungen wird dabei das hydraulische System des Anbauverdichters 10 mit dem hydraulischen System des Baggers verbunden. Durch eine Ansteuerung entsprechender Ventile, die in den Anbauverdichter 10 integriert, in der Zeichnung jedoch nicht dargestellt sind, kann der Maschinenführer vom Führerstand des Baggers aus den Gerotor 54 in Drehung versetzen oder anhalten. Hierdurch kann der Funktionsabschnitt 14 des Anbauverdichters 10 gegenüber der Kupplung 12 um eine Längsachse 84 der Dreheinrichtung 26 beliebig gedreht werden. Wenn der Funktionsabschnitt 40 die gewünschte Winkelstellung erreicht hat, wird der Gerotor 54 angehalten. Aufgrund der selbsthemmenden Eigenschaften des Schneckengetriebes 42 ist der Funktionsabschnitt 14 nun in dieser Winkellage arretiert.

Der Maschinenführer kann nun die Verdichterplatte 16 auf den Boden an der gewünschten Stelle aufsetzen und durch Schalten entsprechender Ventile die Exzentereinrichtung 18 in Betrieb nehmen. Hierdurch wird die für die Verdichterarbeit benötigte Schwingung der Verdichterplatte 16 erzeugt.

Durch die Drehdurchführung 28 wird dabei eine zuverlässige Durchleitung der hydraulischen Zu- und Abflüsse sowie Leckageflüsse vom Bagger bis zur Exzentereinrichtung 18 und zurück sichergestellt, bei voller Drehbarkeit des Funktionsabschnitts 14 gegenüber der Kupplung 12.

Aufgrund des modularen Aufbaus ist es auch sehr leicht möglich, den Anbauverdichter ohne Drehdurchführung 28 auszugestalten. In diesem Fall wird lediglich auf die Achse 74, die Hülse 78 und die Endplatte 82 verzichtet. Auch die Wartung wird durch die lösbare Befestigung der Hülse 78 auf der Achse 74 und auch der Achse 74 an der Deckplatte 32 erleichtert.

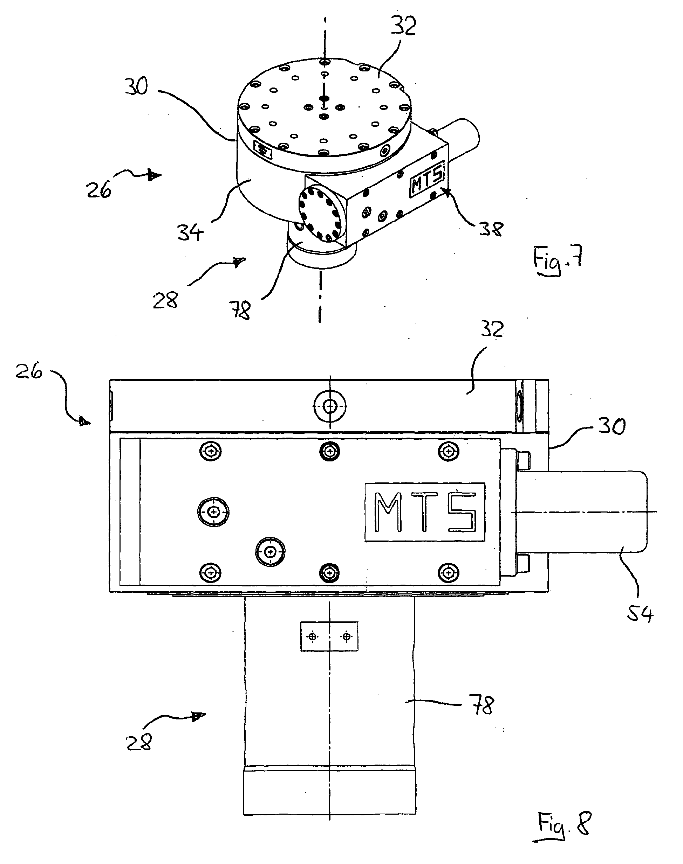

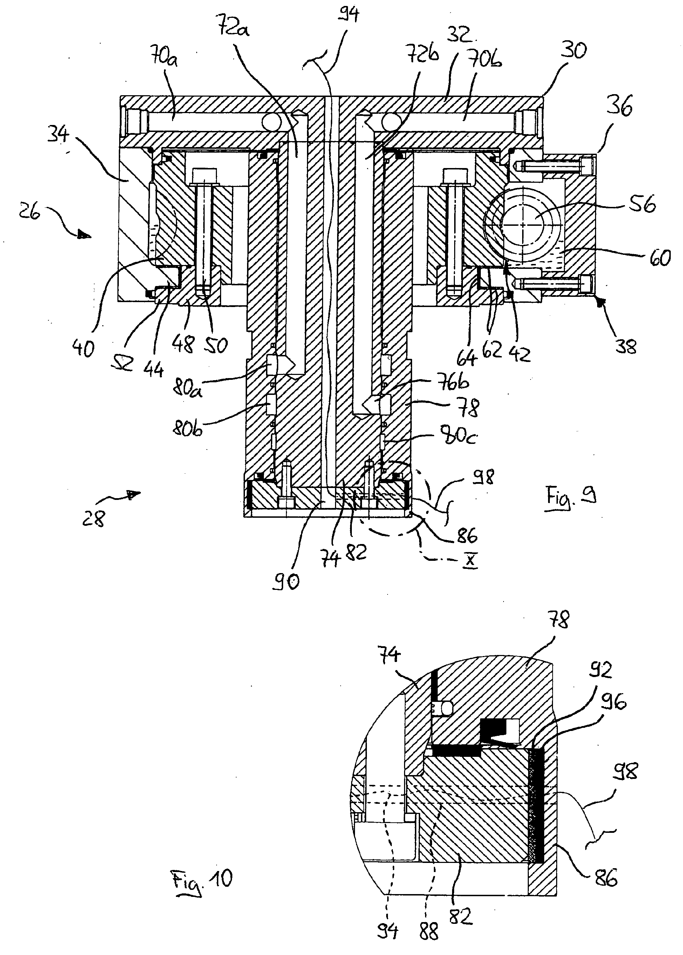

Eine weitere Ausführungsform ist in den Figuren 7 bis 10 gezeigt. Dabei gilt, dass solche Elemente und Bereiche, die äquivalente Funktionen zu solchen Elementen und Bereichen aufweisen, die bereits im Zusammenhang mit dem vorgehenden Ausführungsbeispiel erwähnt wurden, die gleichen Bezugszeichen tragen und nicht nochmals im Detail erläutert sind.

Die in den Figuren 7 bis 10 gezeigte Ausführungsform weist eine Drehdurchführung 28 auf, die nicht nur die Durchleitung hydraulischer Ströme, sondern auch elektrischer Ströme ermöglicht. Hierzu verfügt die Hülse 78 an ihrem in den Figuren unteren Ende über einen sich axial erstreckenden Kragen 86, der sich in axialer Richtung über die Endplatte 82 hinaus erstreckt, diese also radial von außen umfasst. In der Endplatte 82 sind darüber hinaus mehrere sich radial erstreckende Bohrungen vorhanden, von denen eine mit dem Bezugszeichen 88 dargestellt ist. Die Bohrungen 88 gehen von einem zentrischen Kanal 90 ab, der sich von der Endplatte 82 über die Länge der gesamten Achse 74 bis zur Oberseite der Deckplatte 32 erstreckt.

Auf der äußeren Umfangsfläche der Endplatte 82 ist ein innerer Schleifkontakt 92 angeordnet. Dieser ist mit einem Kabel 94 verbunden, welches sich über die radiale Bohrung 88 und den zentrischen Kanal 90 bis zur Kupplung 12 erstreckt, wo es mit einem elektrischen System des Baggers verbunden ist. Radial außen von dem inneren Schleifkontakt 92 ist ein äußerer Schleifkontakt 96 angeordnet, der an der Innenseite des Kragens 86 der Hülse 78 befestigt ist. An dem äußeren Schleifkontakt 96, der mit dem inneren Schleifkontakt 92 in gleitender Verbindung steht, ist ebenfalls ein Kabel 98 befestigt, welches zu einem Verbraucher im Funktionsabschnitt 14 des Anbauverdichters 10 führt, beispielsweise einer Messeinrichtung zum Feststellen des Verdichtungszustands des Erdreichs, und/oder zu einer Lichtquelle, etc.

Im Betrieb bilden die beiden Schleifkontakte 92 und 96 eine kontinuierliche Verbindung zwischen dem gegenüber der Kupplung 12 frei rotierbaren Funktionsabschnitt 14. Dabei versteht sich, dass dann, wenn mehrere elektrische Verbindungen durch die Drehdurchführung 28 hindurch geführt werden sollen, dies beispielsweise über mehrere, axial voneinander beabstandete Schleifkontakte geschehen kann, die über entsprechende axial versetzte radiale Bohrungen in der Endplatte 82 mit den entsprechenden elektrischen Leitern verbunden sind.

## Patentansprüche

1. Bagger-Zusatzgerät (10), mit einer Kupplung (12) zum Ankuppeln des Bagger-Zusatzgeräts an einen Baggerarm, mit einem Funktionsabschnitt (14), und mit einer Dreheinrichtung (26) zum Drehen des Funktionsabschnitts (14) relativ zur Kupplung (12), **dadurch gekennzeichnet, dass** die Dreheinrichtung (26) ein selbsthemmendes Schneckengetriebe (42) umfasst, welches einerseits mit einem Rotor (48) der Dreheinrichtung (26) und andererseits mit einem Antrieb (38) der Dreheinrichtung (26) wirkverbunden ist.

2. Bagger-Zusatzgerät (10) nach Anspruch 1, **dadurch gekennzeichnet, dass** der Antrieb (38) einen hydraulischen Gerotor (54) umfasst.

3. Bagger-Zusatzgerät (10) nach einem der vorhergehenden Ansprüche, **dadurch gekennzeichnet, dass** das Schneckengetriebe (42) mindestens bereichsweise in einem Ölbad (60) angeordnet ist.

4. Bagger-Zusatzgerät (10) nach einem der vorhergehenden Ansprüche, **dadurch gekennzeichnet, dass** ein Schneckenrad (40) und/oder eine Schnecke (56) des Schneckengetriebes (42) mittels mindestens eines Gleitlagers (62, 64, 68) gelagert ist.

5. Bagger-Zusatzgerät (10) nach Anspruch 5, **dadurch gekennzeichnet, dass** ein Radial-Gleitlager mindestens ein Führungsband aus einem Thermoplast (64) umfasst.

6. Bagger-Zusatzgerät (10) nach einem der Ansprüche 5 oder 6, **dadurch gekennzeichnet, dass** ein Axial-Gleitlager des Schneckenrads (40) einen Messingring (62) umfasst.

7. Bagger-Zusatzgerät (10) nach einem der Ansprüche 5 bis 7, **dadurch gekennzeichnet, dass** in mindestens einem Gleitlager (68) eine Schmiertasche vorhanden ist, welche im Betrieb die Ausbildung eines hydrostatischen Schmierfilms unterstützt.

8. Bagger-Zusatzgerät (10) nach einem der vorhergehenden Ansprüche, **dadurch gekennzeichnet, dass** das Schneckengetriebe (42) eine Magneteinrichtung umfasst, welche im Betrieb entstehende Metallspäne auffängt.

9. Bagger-Zusatzgerät (10) nach einem der vorhergehenden Ansprüche, **dadurch gekennzeichnet, dass** die Dreheinrichtung (26) eine Drehdurchführung (28) für mindestens zwei Hydraulikleitungen und/oder mindestens eine elektrische Leitung umfasst, wobei die Drehdurchführung (28) einen drehfesten Abschnitt (32, 74) mit einem ersten Leitungsabschnitt (70, 72) und einen drehbaren Abschnitt (78) mit einem zweiten Leitungsabschnitt (80) umfasst.

10. Bagger-Zusatzgerät nach einem der vorhergehenden Ansprüche, **dadurch gekennzeichnet, dass** die Dreheinrichtung (26) und/oder die Drehdurchführung (28) mindestens bereichsweise modular aufgebaut sind.

11. Bagger-Zusatzgerät (10) nach einem der Ansprüche 9 oder 10, **dadurch gekennzeichnet, dass** mindestens ein erster Bereich (32) des drehfesten Abschnitts der Drehdurchführung (26) ein Element eines Gehäuses (36) des Schneckengetriebes (42) bildet.

12. Bagger-Zusatzgerät (10) nach Anspruch 11, **dadurch gekennzeichnet, dass** ein zweiter Bereich des drehfesten Abschnitts eine Achse (74) für den drehbaren Abschnitt bildet, welche lösbar am ersten Bereich (32) des drehfesten Abschnitts befestigt ist.

13. Bagger-Zusatzgerät (10) nach einem der vorhergehenden Ansprüche, **dadurch gekennzeichnet, dass** es ein Anbauverdichter ist.

14. Bagger-Zusatzgerät (10) nach einem der vorhergehenden Ansprüche, **dadurch gekennzeichnet, dass** die Kupplung (12) eine Schnellkupplung zum Anschluss eines Hydrauliksystems des Bagger-Zusatzgeräts (10) an ein Hydrauliksystem des Baggers und/oder eine Schnellkupplung zum Anschluss eines elektrischen Systems des Bagger-Zusatzgeräts (10) an ein elektrisches System des Baggers umfasst.
